# EUROPEAN PATENT APPLICATION

(11) **EP 1 588 868 A1**
(43) Date of publication of application: **26.10.2005**
(21) Application number: 03772823.5
(22) Date of filing: 17.11.2003
(51) Int. Cl.: B60B 27/00, B60B 35/18, F16C 19/18, F16C 33/64, B23B 5/02

(54) **WHEEL BEARING UNIT AND METHOD OF MANUFACTURING THE BEARING UNIT**

(30) Priority: 29.01.2003 JP 2003019887; 25.04.2003 JP 2003121894
(71) Applicant: NSK LTD.,, Shinagawa-ku, Tokyo 141-8560 (JP)
(72) Inventor: IGARI, Toshirou, c/o NSK Ltd., Shiga 520-3180 (JP); OZEKI, Yoshihiro, c/o NSK Ltd., Shiga 520-3180 (JP)
(74) Representative: Grünecker, Kinkeldey, Stockmair & Schwanhäusser Anwaltssozietät
(86) International application number: PCT/JP2003/014587
(87) International publication number: WO 2004/067296

(57) **Abstract**

Both end portions in an axial direction of a hub 8b are supported by a supporting portion of a working apparatus rotatably centering on a center axis of the hub 8b and in a state of restraining a displacement thereof in a radial direction. Further, before removing the hub 8b from the supporting portion from the state, an outer side face 28 of an attaching flange 13 and a first inner ring track 14 are worked to predetermined shapes.

Thereby, judder in braking is prevented from being brought about by promoting a perpendicularity of the outer side face 28 of the attaching flange 13 provided to the hub 8b relative to a rotational center of the hub 8b and restraining a deflection of a rotor coupled to fix to the outer side face 28.

## Description

### <Technical Field>

The present invention relates to a bearing unit for a wheel for supporting a wheel of an automobile as well as a braking rotating member of a rotor, a drum or the like and an improvement in a method of fabricating the bearing unit for a wheel.

### <Background Art>

A wheel 1 constituting a wheel of an automobile and a rotor 2 constituting a disk brake which is a braking apparatus are rotatably supported by a knuckle 3 constituting a suspension by a structure as shown by Fig.20 as described in JP-A-2000-234624 (hereinafter, referred to as Patent Reference 1) . That is, an outer ring 6 constituting a bearing unit 5 for a wheel constituting an object of the invention is fixed to a portion of a circular support hole 4 formed at the knuckle 3 by a plurality of pieces of bolts 7. On the other hand, the wheel 1 and the rotor 2 are coupled to fix to a hub 8 constituting the bearing unit 5 for a wheel by pluralities of pieces of stud bolts 9 and nuts 10. Further, an inner peripheral face of the outer ring 6 is formed with double rows of outer ring tracks 11a, 11b and an outer peripheral face thereof is formed with a coupling flange 12, respectively. The outer ring 6 is fixed to the knuckle 3 by coupling the coupling flange 12 with the knuckle 3 by the respective bolts 7.

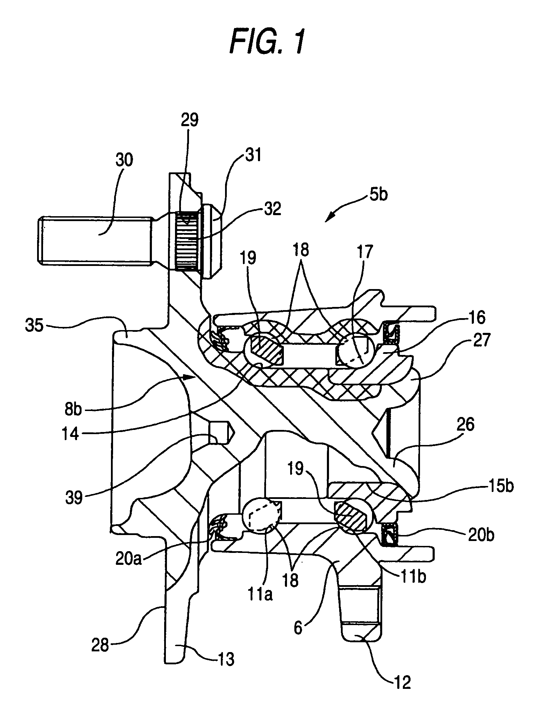

In contrast thereto, an attaching flange 13 is formed at a portion of an outer peripheral face of the hub 8 and a portion projected from an outer end opening of the outer ring 6 ("outer" refers to a portion constituting an outer side in a width direction in a state of being integrated to an automobile on left sides of Figs.1, 20, 21, conversely, right sides of Figs.1, 20, 21 constituting a center side in the width direction in the state of being integrated to an automobile is referred to as "inner"). The wheel 1 and the rotor 2 are coupled to fix to one side face (an outer side face 28 in the illustrated example) of the attaching flange 13 by the respective stud bolts 9 and the respective nuts 10. Further, a first inner ring track 14 is formed at an outer peripheral face of a middle portion of the hub 8 and a portion opposed to the outer ring track 11a on an outer side of the double rows of outer ring tracks 11a, 11b. Further, an inner ring 16 is outwardly fitted to fix to a small diameter stepped portion 15 formed at an inner end portion of the hub 8. Further, a second inner ring track 17 formed at the outer peripheral face of the inner ring 16 is made to be opposed to the outer ring track 11b on an inner side of the double rows of outer ring tracks 11a, 11b.

Between the respective outer ring tracks 11a, 11b and the first and the second inner ring tracks 14, 17, pluralities of pieces of balls 18, 18 respectively constituting rolling members are rollably provided in a state of being retained respectively by retainers 19, 19. By the constitution, a ball bearing of a double row angular type which is a back face combination is constituted and the hub 8 is supported by an inner side of the outer ring 6 rotatably and to be able to support a radial load and a thrust load. Further, seal rings 20a, 20b are respectively provided between inner peripheral faces of both end portions of the outer ring 6 and an outer peripheral face of the middle portion of the hub 8 and an outer peripheral face of an inner end portion of the inner ring 16 to block a space provided with the respective balls 18, 18 from an outer space. Since the illustrated example is the bearing unit 5 for a wheel for a driving wheel (rear wheel of FR vehicle, front wheel of FF vehicle, all wheels of 4WD wheel) and therefore, a spline hole 21 is formed at a center portion of the hub 8. Further, the spline hole 21 is inserted with a spline shaft 23 of a uniform joint 22.

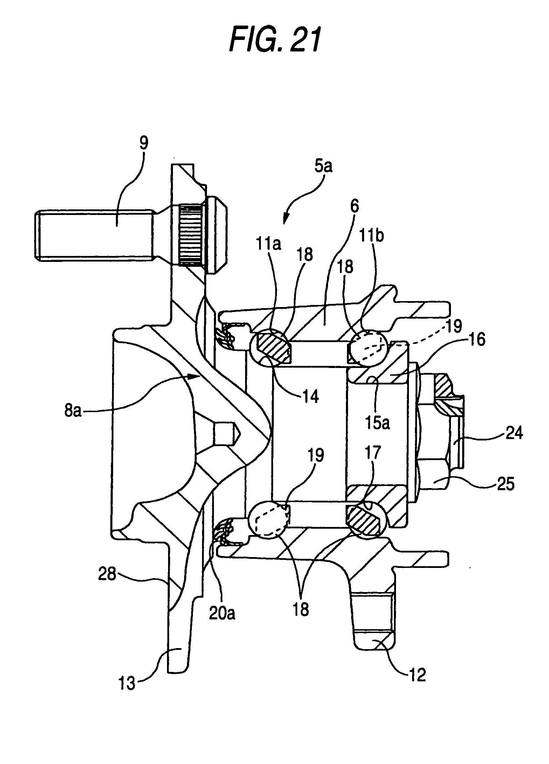

In contrast thereto, in cases of bearing units 5a, 5b for a wheel for a driven wheel (front wheel of FR vehicle and RR vehicle, rear wheel of FF vehicle) as shown by Fig.21 and Fig. 1 showing a first example of an embodiment of the invention, mentioned later, hubs 8a, 8b are constituted by solid members. Further, in the case of a structure shown in Fig.21, the inner ring 16 is fixed to the hub 8a by pressing the inner end face of the inner ring 16 outwardly fitted to a small diameter stepped portion 15a of the hub 8a by a nut 25 screwed to a male screw portion 24 provided at an inner end portion of the hub 8a. Further, in the case of a structure shown in Fig.1, the inner ring 16 is fixed to the hub 8b by pressing the inner end face of the inner ring 16 outwardly fitted to a small diameter stepped portion 15b of the hub 8b by a calked portion 27 constituted by plastically deforming a cylindrical portion 26 provided at an inner end portion of the hub 8b.

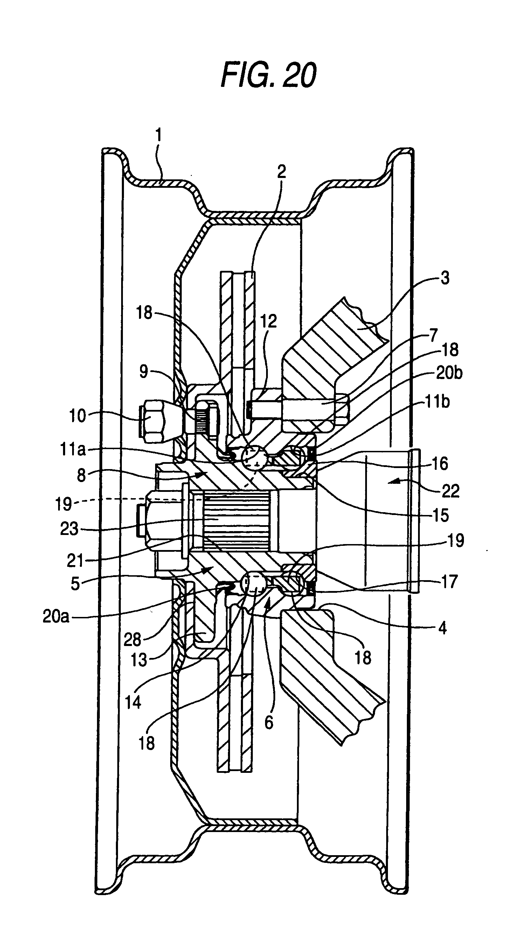

When the above-described bearing unit 5 (5a, 5b) for a wheel is used, as shown by Fig.20, the outer ring 6 is fixed to the knuckle 3 and the wheel 1 assembled with a tire, not illustrated, and the rotor 2 are fixed to the attaching flange 13 of the hub 8 (8a, 8b). Further, a disk brake for braking is constituted by assembling the rotor 2 and a support and a caliper, not illustrated, fixed to the knuckle 3. In braking, a pair of pads provided by interposing the rotor 2 are pressed to both side faces of the rotor 2.

Further, a method of fabricating a hub constituting a bearing unit for a wheel is described in JP-A-10-217001 (hereinafter, referred to as Patent Reference 2) . In the case of the fabricating method described in Patent Reference 2, a side face of an attaching flange provided at the hub and an outer peripheral face of the hub are turned in a state of supporting the hub by a working apparatus by constituting a reference by an end face of a positioning cylinder portion provided at an end portion of the hub for positioning a wheel.

However, in a bearing unit for a wheel according to a background art, it is known that a vibration accompanied by unpleasant noise referred to as judder is generated frequently in braking an automobile. Although as causes of the vibration, various causes of nonuniformity of a state of friction between a side face of the rotor 2 and a lining of the pad and the like are known, it is also known that a deflection of the rotor 2 constitutes a significant cause. That is, although the side face of the rotor 2 is inherently to be perpendicular to a rotational center of the rotor 2, it is difficult to make the side face completely perpendicular thereto by an unavoidable fabrication error. As a result, it is unavoidable that the side face of the rotor 2 is deflected in a direction of a rotating shaft (left and right direction of Fig.20) more or less in running an automobile. When such a deflection (an amount of displacement in a left and right direction of Fig. 20) is increased, the judder is brought about when linings of a pair of pads are pressed to the both side faces of the rotor 2 for braking.

In order to restrain the judder brought about by such a cause, it is important to restrain (reduce) a deflection in an axial direction of the side of the rotor 2 (axial deflection) . Further, in order to restrain the deflection, it is necessary to promote a perpendicularity of an attaching face of the attaching flange 13 relative a rotational center of the hub 8, 8a, 8b (the outer side face 28 of the attaching flange 13 and left side faces of Figs.1, 20, 21). Although there are present a plurality of factors effecting an influence on the perpendicularity, as a factor particularly effecting a significant influence, there is a parallelism between the attaching face and track faces (the outer ring tracks 11a, 11b and the inner ring tracks 14, 17) . Further, in order to promote the parallelism, it is necessary to finish with excellent accuracy a positional relationship among the attaching face of the attaching flange 13, the first inner ring track 14 formed at the outer peripheral face of the middle portion and the small diameter stepped portion 15, 15a, 15b formed at the inner end portion and shapes and dimensions of the respective portions. When accuracies of the shapes and the dimensions of the first inner ring track 14 and the small diameter stepped portion 15 thereamong are promoted in relation to the attaching face, the perpendicularity of the attaching face relative to the rotational center of the hub 8, 8a, 8b can be promoted.

There is a technology for preventing the deflection of the attaching flange 13 which amounts to the deflection of the rotor 2 described, in for example, Patent Reference 2, mentioned above. However, according to the background art described in Patent Reference 2, the face which is not needed inherently is finely finished as the reference face and therefore, there is a possibility of wastefully increasing the cost. Further, in the case of the invention described in Patent Reference 2, owing to the structure of fixing a pair of inner rings respectives of which are constituted by members separated from the hub to the outer peripheral face of the hub and therefore, there also is a possibility of bringing in an error of end faces of the respective inner rings and an inner ring track as an error of the parallelism between the attaching face of the attaching flange and the inner ring track.

Further, in the background art, there also is a case in which in order to cancel the deflection of the attaching flange 13 and the deflection based on an error of a shape of the rotor 2 per se, after selecting and assembling the bearing unit 5 for a wheel and the rotor 2, or assembling the bearing unit 5 for a vehicle and the rotor 2, the side face of the rotor 2 is worked. However, in the case of the former, a selecting operation for assembling becomes troublesome, and in the case of the latter, a machine apparatus for working becomes complicated and large-sized or the like, which causes an increase in cost.

A bearing unit for a wheel and a method of fabricating the same of the invention haven been carried out in view of such a situation and it is an object of the invention to provide a bearing unit for a vehicle capable of realizing to restrain unpleasant noise or vibration generated in braking without particularly increasing cost and a method of fabricating the same.

### <Disclosure of the Invention>

In a bearing unit for a wheel and a method of fabricating the same according to the invention, similar to the above-described bearing unit for a wheel of the background art, the bearing unit for a wheel of the invention includes an outer ring having double rows of outer ring tracks at an inner peripheral face thereof, a hub directly formed with a first inner ring track at a middle portion of an outer peripheral face thereof and formed with a small diameter stepped portion at an inner end portion thereof, an inner ring outwardly fitted to fix to the small diameter stepped portion and having a second inner ring track at an outer peripheral face thereof, and a rolling member pluralities of pieces of which are rollably provided respectively between the respective outer ring tracks and the first and the second inner ring tracks.

Further, at a portion of the outer peripheral face of the hub proximate to an outer end thereof is provided with an attaching flange for coupling to fix a braking rotating member and a wheel at a side face thereof in a state of being used.

Particularly, according to the bearing unit for a wheel of the invention, the side face of the attaching flange for coupling to fix the braking rotating member and the wheel and the first inner ring track directly formed at the hub are worked to predetermined shapes after rotatably supporting the hub by a supporting portion of a working apparatus (centering on a center axis of the hub) and before removing the hub from the supporting portion.

Further, in place of the first inner ring track, the side face of the attaching flange as well as a portion of an outer peripheral face of a middle portion of the hub at an interval between the first inner ring track and the small diameter stepped portion (constituting a reference face in working the first inner ring track) may be worked to predetermined shapes after supporting the hub rotatably by the supporting portion of the working apparatus and before removing the hub from the supporting portion.

Further, more preferably, the side face of the flange and the first inner ring track or the interval portion of the hub as well as an outer peripheral face of a positioning cylinder portion in a cylindrical shape for positioning an outer peripheral face of the small diameter stepped portion and the wheel are worked to predetermined shapes after supporting the hub rotatably by the supporting portion of the working apparatus and before removing the hub from the supporting portion.

Further, according to a method of fabricating a bearing unit for a wheel of the invention, the side face of the attaching flange and the first inner ring track or the interval portion of the hub are worked to predetermined shapes after supporting the hub rotatably by the supporting portion of the working apparatus (centering on the center axis of the hub) and before removing the hub from the supporting portion.

Further, more preferably, the side face of the attaching flange and the first inner ring track or the interval portion of the hub as well as the outer peripheral face of the small diameter stepped portion and the outer peripheral face of the positioning cylinder portion are worked to predetermined shapes after supporting the hub rotatably by the supporting portion of the working apparatus and before removing the hub from the supporting portion.

Further, according to the bearing unit for a wheel of the invention, the hub is worked to a predetermined shape in a state of supporting an end portion in an axial direction of the hub by a chuck and supporting both end portions in the axial direction thereof by a pair of centers.

Further, according to a method of fabricating a bearing unit for a wheel of the invention, in a state of supporting an end portion in the axial direction of the hub by a chuck and supporting both end portions in the axial direction thereof by a pair of centers, the hub is worked to a predetermined shape.

According to the bearing unit for a wheel and the method of fabricating the same of the invention constituted as described above, a positional relationship among the side face of the attaching flange and the first inner ring track as well as the second inner ring track can be constituted by a regular relationship. As a result, a deflection of the braking rotating member fixed to the attaching flange can be restrained by promoting a perpendicularity of the side face of the attaching flange relative to a rotational center of the hub. That is, during a time period until removing the hub from the supporting portion since the hub has been rotatably supported by the supporting portion of the working apparatus (centering on the center axis of the hub), the side face of the attaching flange and the first inner ring track (or the interval portion of the hub constituting the reference face in working the first inner ring track) as well as the small diameter stepped portion having the second inner ring track to which the inner ring is outwardly fitted to fix (and the positioning cylinder portion in the cylindrical shape for positioning the wheel) are formed to predetermined shapes and dimensions. Therefore, in working the side face of the attaching flange and in working the first inner ring track (or in working the interval portion of the hub), and in working the small diameter stepped portion (and the positioning cylinder portion), the rotational center of the hub is not shifted, and the side face and the first inner ring track (or the interval portion of the hub) as well as the small diameter stepped portion (and the positioning cylinder portion) can be worked while making the rotational center of the hub stay the same without shifting the rotational center of the hub. Therefore, the positional relationship among the side face of the attaching flange and the first inner ring track as well as the second inner ring track can be constituted by a regular relationship.

Further, when the side face of the attaching flange, the first inner track, the interval portion of the hub, the small diameter stepped portion, the positioning cylinder portion and the like are worked as described above, in the case of working the hub to a predetermined shape in a state of supporting the end portion in the axial direction by the chuck and supporting the both end portions in the axial direction by the pair of centers, in working the hub, the rotational center of the hub can be made to be difficult to shift. Therefore, the positional relationship among the side face of the attaching flange and the first inner ring track as well as the second inner ring track can further accurately be restrained.

### <Brief Description of the Drawings>

Fig. 1 is a sectional view showing a first example of an embodiment of the invention;
Fig.2 is a sectional view showing an initial step of operation of working a hub;
Fig.3 is a sectional view showing a succeeding step thereof;
Fig.4 is a sectional view showing a succeeding step thereof;
Fig.5 is a sectional view showing a succeeding step thereof;
Fig.6 is a sectional view showing a succeeding step thereof;
Fig.7 is a sectional view showing a succeeding step thereof;
Fig. 8 is a sectional view showing a first example of a succeeding step thereof;
Fig.9 is a sectional view showing a second example of a succeeding step thereof;
Fig.10 is a sectional view showing a third example of a succeeding step thereof;
Fig.11 is a sectional view showing a fourth example of a succeeding step thereof;
Fig.12 is a sectional view showing other example of a working step;
Fig.13 is a sectional view of a half portion similar to Fig.2 showing a second example of the embodiment of the invention;
Fig.14 is a sectional view similar to Fig.9 showing a third example of the embodiment of the invention;
Fig.15 is a sectional view similar to Fig.7 showing a fourth example of the embodiment of the invention;
Fig.16 is a sectional view similar to Fig.12 showing a fifth example of the embodiment of the invention;
Fig. 17 is a sectional view similar to Fig. 16 showing the fifth example further specifically;
Fig.18 is a sectional view similar to Fig.16 showing a sixth example of the embodiment of the invention;
Fig.19 is a sectional view similar to Fig.18 showing the sixth example further specifically;
Fig.20 is a sectional view showing an example of a state of assembling a bearing unit for a wheel constituting an object of the invention; and
Fig.21 is a sectional view similarly showing other example of a bearing unit for a vehicle constituting an object of the invention.

Further, in notations in the drawings, numeral 1 designates a wheel, numeral 2 designates a rotor, numeral 3 designates a knuckle, numeral 4 designates a support hole, numeral 5 (5a, 5b) designates a bearing unit for a wheel, numeral 6 designates an outer ring, numeral 7 designates a bolt, numeral 8 (8a, 8b) designates a hub, numeral 9 designates a stud bolt, numeral 10 designates a nut, notation 11a (11b) designates an outer ring track, numeral 12 designates a coupling flange, numeral 13 designates an attaching flange, numeral 14 designates a first inner ring track, numeral 15 (15a, 15b) designates a small diameter stepped portion, numeral 16 designates an inner ring, numeral 17 designates a second inner ring track, numeral 18 designates a ball, numeral 19 designates a retainer, notation 20a (20b) designates a seal ring, numeral 21 designates a spline hole, numeral 22 designates a universal joint, numeral 23 designates a spline shaft, numeral 24 designates a mail screw portion, numeral 25 designates a nut, numeral 26 designates a cylindrical portion, numeral 27 designates a calked portion, numeral 28 designates an outer side face, numeral 29 designates an attaching hole, numeral 30 designates a stud bolt, numeral 31 designates a flange portion, numeral 32 designates a serration portion, numeral 33 (33a, 33b) designates a center, notation 34a (34b) designates a bit, numeral 35 designates a positioning cylinder portion, numeral 36 designates a chuck, numeral 37 designates a jig, numeral 38 designates a bit, numeral 39 designates a center hole, numeral 40 designates a drill, numeral 41 designates a jig, numeral 42 designates a chuck, numeral 43 designates a bit, numeral 44 designates a support base, numeral 45 designates a drill, numeral 46 designates a spot facing bit, numeral 47 designates a jig, numeral 48 designates a bit, numeral 49 designates a support base, numeral 50 designates a high frequency quenching apparatus, numeral 51 designates a chuck, numeral 52 designates a jig, numeral 53 (53') designates a grindstone, numeral 54 designates a backing plate, numeral 55 (55') designates a shoe, numeral 56 designates a grindstone for superfinishing, numeral 57 (57a, 57b) designates a chuck, numeral 58 designates a contact block and numeral 59 designates a chuck claw.

### <Best Mode for Carrying Out the Invention>

Figs.1 through 8 show a first example of an embodiment of the invention. An outer peripheral face of the outer ring is provided with the coupling flange 12 for coupling to fix the outer ring 6 to the knuckle 3 (refer to Fig. 20) . Further, an inner peripheral face of the outer ring 6 is formed with double rows of the outer ring tracks 11a, 11b. A portion of an inner peripheral face of a middle portion of the outer ring 6 including the respective outer ring tracks 11a, 11b indicated by a skewed lattice at an upper half portion of Fig. 1 is hardened over an entire periphery thereof by high frequency quenching. Further, portions of outer peripheral faces of the hub 8b and the inner ring 16 opposed to the respective outer ring tracks 11a, 11b are provided with the first and the second inner ring tracks 14, 17.

That is, the first inner ring track 14 is directly formed at the outer peripheral face of the middle portion of the hub 8b and the inner ring 16 formed with the second inner ring track 17 at an outer peripheral face thereof is outwardly fitted to fix to the small diameter stepped portion 15b formed at an inner end of the hub 8b. The inner ring 16 is produced by a hard metal of bearing steel such as SUJ2 or the like and is hardened by quenching to a core portion thereof. Further, by the calked portion 27 constituted by plastically deforming the cylindrical portion 26 provided at an inner end of the hub 8b to an outer side in a diameter direction, the inner ring 16 is attached to the hub 8b by pressing an inner end face of the inner ring 16. Further, a portion of the hub 8b proximate to an outer end thereof and a portion projected from an outer end opening of the outer ring 6 is provided with the attaching flange 13 for fixing the wheel 1 constituting the wheel and the rotor 2 (refer to Fig.22) or a drum constituting a braking rotating member. In the case of the example, the outer side face 28 (left face side of Fig.1) of the attaching flange 13 is made to constitute an attaching face to be attached with the wheel 1 and the rotor 2.

Further, the attaching holes 29 are respectively formed at a plurality of locations in a circumferential direction of the attaching flange 13 and on the same circumference constituting a center thereof by a rotational center of the hub 8b, and base end portions of the stud bolts 30 are inwardly fitted to fix respectively to the attaching holes 29. The stud bolt 30 is formed with the flange portion 31 at a base end portion thereof and formed with the serration portion 32 at a portion of an outer peripheral face of a middle portion thereof proximate to the base end portion, respectively. The stud bolt 30 is inserted into the attaching hole 29 from an inner side to an outer side (from right to left of Fig. 1), the serration portion 32 is press-fit to the attaching hole 29 and the flange portion 31 is butted to an inner side face (right side face of Fig.1) of the attaching flange 13.

Further, a portion of an outer peripheral face of the hub 8b indicated by a skewed lattice at an upper half portion of Fig.1 is hardened over an entire periphery thereof by high frequency quenching. In the portion, a base end portion of the attaching flange 13 is hardened in order to prevent the base end portion from being plastically deformed despite a large moment applied to the attaching flange 13 in running. Further, a portion of the first inner ring track 14 is hardened in order to prevent the first inner track 14 from being formed with a press mark despite a large face pressure applied to a portion thereof brought into contact with the balls 18, 18, mentioned later. Further, the small diameter stepped portion 15b is hardened in order to prevent the small diameter stepped portion 15b from being plastically deformed despite a large radial load applied from the inner ring 16. Further, a portion at an interval between the small diameter stepped portion 15b and the inner ring track 14 is hardened in order to prevent the interval portion from being plastically deformed despite a large moment load or thrust load applied in running.

Further, a plurality of pieces of the balls 18, 18 respectively constituting rolling members are rollably provided between the respective outer ring tracks 11a, 11b and the first and the second inner ring tracks 14, 17 in a state of being retained by the retainers 19, 19. By the constitution, the hub 8b is made to be able to be supported rotatably on a side of an inner diameter of the outer ring 6 and the wheel including the wheel 1 and the rotor 2 are made to be able to be supported rotatably by the knuckle 3. Further, the seal rings 20a, 20b are respectively provided between inner peripheral faces of both end portions of the outer ring 6 and an outer peripheral face of a middle portion of the hub 8b as well as an outer peripheral face of an inner end portion of the inner ring 16, to block a space provided with the respective balls 18, 18 from an outer space to thereby prevent grease filled in the space from being leaked and prevent a foreign matter from invading the space.

In the above-described bearing unit 5b for a wheel, the outer side face 28 of the attaching flange 13 for coupling to fix the wheel 1 and the rotor 2 is worked to a predetermined shape and dimension after hardening the outer peripheral face of the middle portion of the hub 8b indicated by a skewed lattice at the upper half portion of Fig. 1 by high frequency quenching processing which is a kind of a heat treatment. That is, after the skewed lattice portion is subjected to the high frequency heat treatment to harden the skewed lattice portion and the hub 8b is deformed based on the heat treatment, the outer side face 28 as well as the first inner ring track 14 and the like are subjected to machining of turning or the like to work the outer side face 28 as well as the first inner ring track 14 and the like to predetermined shapes and dimensions.

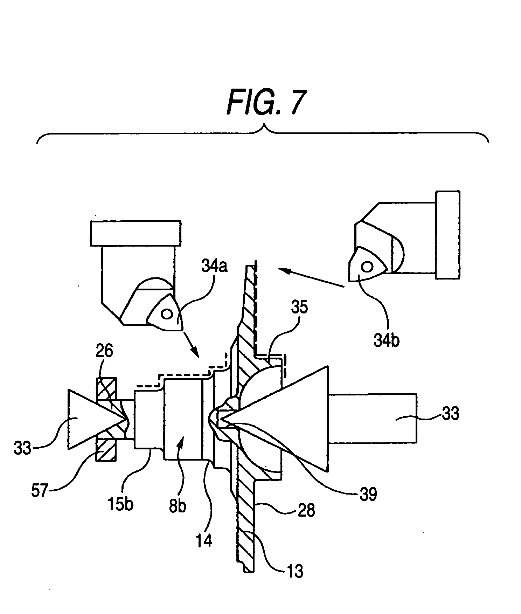

Further, in the case of the example, the outer side face 28 of the attaching flange 13 and the first inner ring track 14 and the like are worked as follows. That is, as shown by Fig. 7, mentioned later, both end portions in an axial direction of the hub 8b are supported by a pair of the centers 33, 33 constituting support portions of the working apparatus rotatably centering on a center axis of the hub 8b and in a state of restraining displacement thereof in a radial direction. Further, one center 33 of the pair of centers 33, 33 is supported by a spindle of the working apparatus to drive to rotate the hub 8b while supporting the center axis of the hub 8b. Further, other center 33 thereof is supported by a tail spindle of the working apparatus to support the center axis of the hub 8b while permitting to rotate the hub 8b. Further, as shown by Fig. 7, the hub 8b may be driven to rotate by grabbing an inner end portion of the hub 8b by the chuck 57 and rotating the chuck 57.

When the hub 8b is worked as mentioned later in a state of supporting the both end portions in the axial direction of the hub 8b by the pair of centers 33, 33 and grabbing the inner end portion of the hub 8b by the chuck 57 in this way, in comparison with the case of supporting the hub 8b only by the pair of centers 33, 33, or in comparison with the case of supporting the hub 8b only by the chuck 57, a rotational center of the hub 8b can be made to be difficult to shift. That is, by supporting the hub 8b by the pair of centers 33, 33 as well as the chuck 57, in working the hub 8b, despite a force exerted to the hub 8b or the like, the rotational center of the hub 8b can be continued to maintain at a predetermined position and the hub 8b can be worked highly accurately. Further, when the hub 8b is driven to rotate by the chuck 57, the pair of centers 33, 33 support the center axis of the hub 8b while permitting to rotate the hub 8b.

Further, before removing the hub 8b from the respective centers 33, 33 (as well as the chuck 57) from the state of supporting the hub 8b as described above, the outer side face 28 (as well as an outer peripheral face of the positioning cylinder portion 35, mentioned later) of the attaching flange 13 and the first inner ring track 14 (as well as the small diameter stepped portion 15b, mentioned later) are subjected to machining for making shapes of the respective faces to desired shapes such as polishing or turning to work the outer side face 28 and the first inner ring track 14 to predetermined shapes. In other words, after the outer side face 28 of the attaching flange 13 is finished to a flat face and the first inner ring track 14 directly formed at the outer peripheral face of the middle portion of the hub 8b is worked to predetermined shape and dimension in the state of supporting the hub 8b by the respective centers 33, 33 as described above, the hub 8b is removed from the respective centers 33, 33. In this way, there is carried out so-to-speak both centers working for working the hub 8b to predetermined shape and dimension in a state of rotatably supporting the both end portions in the axial direction of the hub 8b by the pair of centers 33, 33.

Further, more preferably, also the outer peripheral face of the small diameter stepped portion 15b to which the inner ring 16 having the second inner ring track 17 is outwardly fitted to fix (refer to Fig.1) is worked to the predetermined shape and dimension before removing the hub 8b from the respective centers 33, 33 after supporting the hub 8b by the respective centers 33, 33 as described above along with the outer side face 28 of the attaching flange 13 and the first inner ring track 14. Further, it is more preferable to also work an outer peripheral face of the positioning cylinder portion 35 for positioning a wheel in attaching the wheel by an outer end portion (left end portion of Fig.1, right end portion of Fig. 7) of the hub 8b along with the outer side face 28 of the attaching flange 13.

Further, an order (before and after) of working the outer side face 28 of the attaching flange 13 (as well as the outer peripheral face of the positioning cylinder portion 35) and the first inner ring track 14 (as well as the outer peripheral face of the small diameter stepped portion 15b) is not particularly limited. For example, the outer side face 28 (as well as the outer peripheral face of the positioning cylinder portion 35) and the first inner ring track 14 (as well as the outer peripheral face of the small diameter stepped portion 15b) may simultaneously be worked. Further, although in the case of the example, the outer side face 28 of the attaching flange 13 (as well as the outer peripheral face of the positioning cylinder portion 35) and the first inner ring track 14 (as well as the outer peripheral face of the small diameter stepped portion 15b) are worked by the bits 34a, 34b which are machining tools different from each other, the outer side face (as well as the outer peripheral face of the positioning cylinder portion 35) and the first inner ring track 14 (as well as the outer peripheral face of the small diameter stepped portion 15b) may be worked by the same machine tool (bit) . In sum, when the hub 8b is attached to the respective centers 33, 33, before removing the hub 8b from the respective centers 33, 33, the outer side face 28 of the attaching flange 13 (as well as the outer peripheral face of the positioning cylinder portion 35) and the first inner ring track 14 (as well as the outer peripheral face of the small diameter stepped portion 15b) are worked to predetermined shapes and dimensions.

When the outer peripheral face of the small diameter stepped portion 15b and the outer peripheral face of the positioning cylinder portion 35 are also worked along with the outer side face 28 of the attaching flange 13 and the first inner ring track 14 as described above, the bits 34a, 34b are moved along portions attached with broken lines in Fig.7 and the portions attached with the broken lines are continuously worked. That is, when a portion of the outer peripheral face of the hub 8b on the inner side (left side of Fig.7) in the axial direction of the attaching flange 13 is worked, the portion is continuously worked from a portion of the attaching flange 13 proximate to an inner diameter of the inner side face of the attaching flange 13 over to an inner end portion of the small diameter stepped portion 15b (including a portion of the outer peripheral face of the hub 8b between the first inner ring track 14 and the small diameter stepped portion 15b) or conversely, from the inner end portion of the small diameter stepped portion 15b over to a portion proximate to the inner diameter of the attaching flange 13 (including the interval portion of the hub 8b). Further, when a portion of the outer peripheral face of the hub 8b on the outer side (right side of Fig.7) in the axial direction of the attaching flange 13 is worked, the portion is continuously worked from an outer peripheral edge of the outer side face 28 of the attaching flange 13 over to an outer end face of the positioning cylinder portion 35, or conversely, from the outer end face to the outer peripheral edge of the attaching flange 13.

Further, in the case of the example, the respective centers 33, 33 are respectively inserted to the cylindrical portion 26 in a shape of a bottomed cylinder at the inner end portion (right end portion of Fig.1, left end portion of Fig.7) of the hub 8b for forming the calked portion 27 and the inner side in the diameter direction of the positioning cylinder portion 35 in a shape of a bottomed cylinder for positioning the wheel in attaching the wheel at the outer end portion of the hub 8b. Further, by butting front end portions of the respective centers 33, 33 respectively to centers of respective bottom portions of the cylinder portion 26 and the positioning cylinder portion 35, the hub 8b is supported rotatably centering on the center axis of the hub 8b. However, other than the pair of centers 33, 33, a support member of, for example, a backing plate of a magnetic adsorption type, a chuck or the like may be used so far as the support member can rotatably support the hub 8b centering on the center axis of the hub 8b.

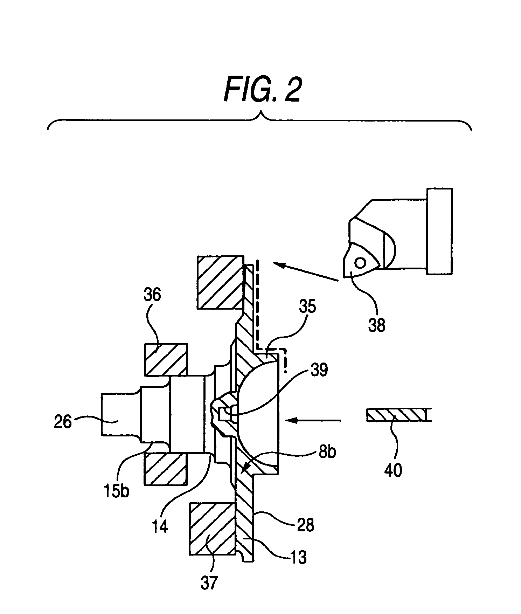

Next, an explanation will be given of a procedure of working the hub 8b constituting the bearing unit 5b for a wheel of the example as described above, in reference to Figs.2 through 8. First, as shown by Fig.2, the portion of the interval between the small diameter stepped portion 15b of the hub 8b and the first inner ring track 14 is grabbed by the chuck 36 and the jig 37 constituting a reference face for positioning the hub 8b is brought into contact with the inner side face (left side face of Fig.2) of the attaching flange 13 of the hub 8b. Further, under the state, while rotating the hub 8b centering on the center axis of the hub 8b, the outer side face (right side face of Fig.2) of the attaching flange 13 and the outer peripheral face of the positioning cylinder portion 35 attached with the broken line in Fig.2 is machined to a predetermined shape by the bit 38 which is a machining tool (from the outer peripheral edge of the outer side face 28 of the attaching flange 13 over to the outer end face of the positioning cylinder portion 35). Although it is not necessary to make accuracy of the working particularly high, more or less machining margins are left at the respective faces. Further, along therewith, a center portion of a bottom portion of the positioning cylinder portion 35 constituting the rotational center of the hub 8b is formed (pierced) with the center hole 39 for butting the center 33, mentioned later, by the drill 40.

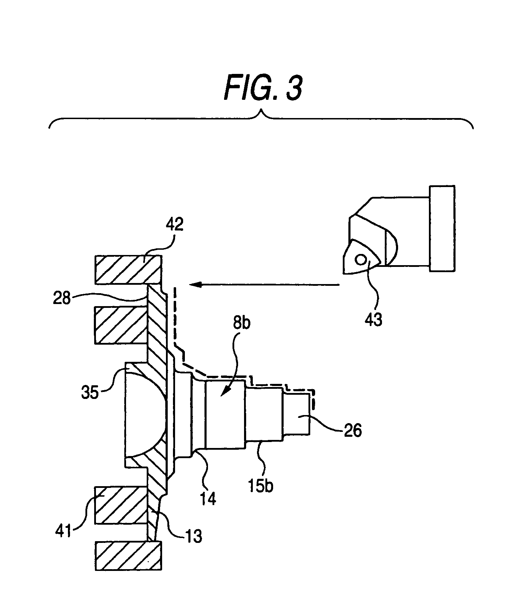

Next, as shown by Fig.3, the jig 41 constituting a reference face for positioning the hub 8b is brought into contact with the outer side face 28 of the attaching flange 13 and the outer peripheral face of the attaching flange 13 is grabbed by the chuck 42. Further, under the state, while rotating the hub 8b centering on the center axis of the hub 8b, the inner side face of the attaching flange 13 and the outer peripheral face of the hub 8b attached with the broken line in Fig.3 are machined by the bit 43 which is a machining tool (from the outer peripheral edge of the inner side face of the attaching flange 13 over to the inner end edge of the hub 8b) . Although it is not necessary to make accuracy of the working particularly high, more or less machining margins are similarly left at the respective faces. Further, although in the illustrated example, the outer peripheral face of the attaching flange 13 is grabbed by the chuck 42, an outer peripheral face of the positioning cylinder portion 35 can also be grabbed by a chuck.

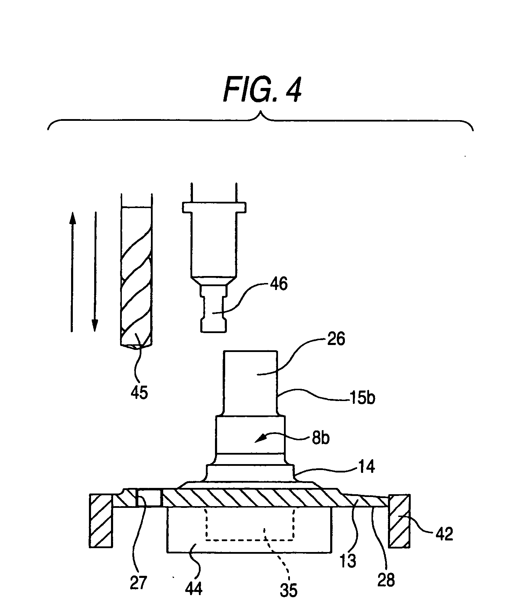

Next, as shown by Fig.4, the hub 8b is mounted on the support base 44 of the working apparatus in a state of disposing the outer side face of the attaching flange 13 on a lower side in a vertical direction, and the outer peripheral face of the attaching flange 13 is grabbed by the chuck 42. Further, under the state, the attaching holes 27 are formed (pierced) by the drill 45 at a plurality of locations in a circumferential direction of the attaching flange 13. Further, along therewith, spot facing portions are formed by subjecting end portions and opening portions on the side of the inner side face (upper side face of Fig.4) of the respective attaching holes 27 to spot facing by the spot facing bit 46.

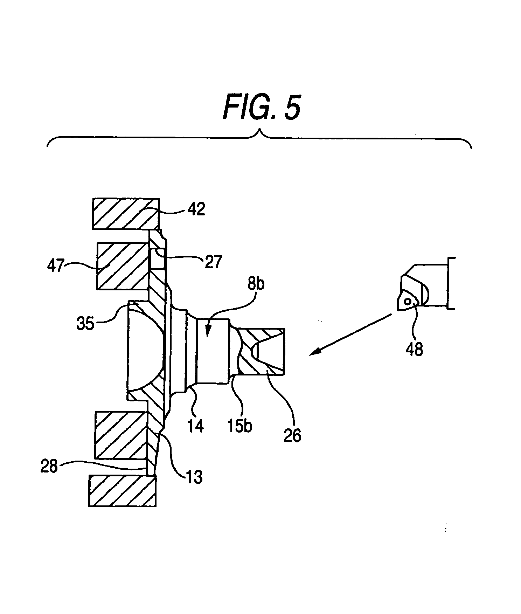

Next, as shown by Fig.5, the jig 47 constituting a reference face for positioning the hub 8b is brought into contact with the outer side face 28 of the attaching flange 13 and the outer peripheral face of the attaching flange 13 is grabbed by the chuck 42. Further, under the state, while rotating the hub 8b centering on the center axis of the hub 8b, the inner peripheral face of the cylinder portion 26 provided at the inner end portion of the hub 8b is worked to finish to a predetermined shape by the bit 48 which is a machining tool. Further, although according to the illustrated example, the outer peripheral face of the attaching flange 13 is grabbed by the chuck 42, the outer peripheral face of the positioning cylinder potion 35 can also be grabbed by a check.

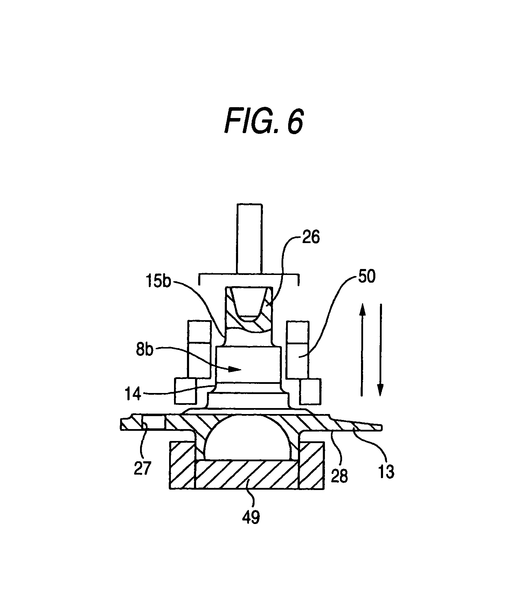

Next, as shown by Fig.6, the hub 8b is mounted on the support base 49 in a state of disposing the outer side face 28 of the attaching flange 13 on a lower side in a vertical direction. Further, under the state, the outer peripheral face of the hub 8b is covered by the high frequency quenching apparatus 50 and a necessary portion of the outer peripheral face of the hub 8b is formed with a surface hardened layer. That is, the portion of the outer peripheral face of the hub 8b indicated by the skewed lattice to the upper half portion of Fig.1, mentioned above, is subjected to high frequency quenching processing from the base end portion of the attaching flange 13 over to the small diameter stepped portion 15b.

Next, as shown by Fig.7, the both end portions in the axial direction of the hub 8b are supported by the pair of centers 33, 33 constituting the support portions of the working apparatus rotatably centering on the center axis of the hub 8b and in the state of restraining the displacement in the radial direction. Further, along therewith, the inner end portion of the hub 8b is grabbed by the chuck 57. Further, under the state, while rotating the hub 8b, the outer side face 28 of the attaching flange 13 as well as the first inner ring track and the like attached with the broken lines in Fig. 7 are worked to predetermined shapes before removing the hub 8b from the respective centers 33, 33. That is, before removing the hub 8b from the respective centers 33, 33 from the state of supporting the hub 8b by the respective centers 33, 33, by the bits 34a, 34b which are respectively machining tools, the outer side face 28 of the attaching flange (as well as the outer peripheral face of the positioning cylinder portion 35) are worked to finish to predetermined shapes and the first inner ring track 14 is machined to a predetermined shape. Further, more preferably, the outer peripheral face of the small diameter stepped portion 15b to which the inner ring 16 (refer to Fig.1) having the second inner ring track 17 is outwardly fitted to fix is worked to a predetermined shape and dimension along with the outer side face 28 of the attaching flange 13 (as well as the outer peripheral face of the positioning cylinder portion 35) and the first inner ring track 14 after supporting the hub 8b by the respective centers 33, 33 as described above and before removing the hub 8b from the respective centers 33, 33. Further, the step may be carried out by polishing.

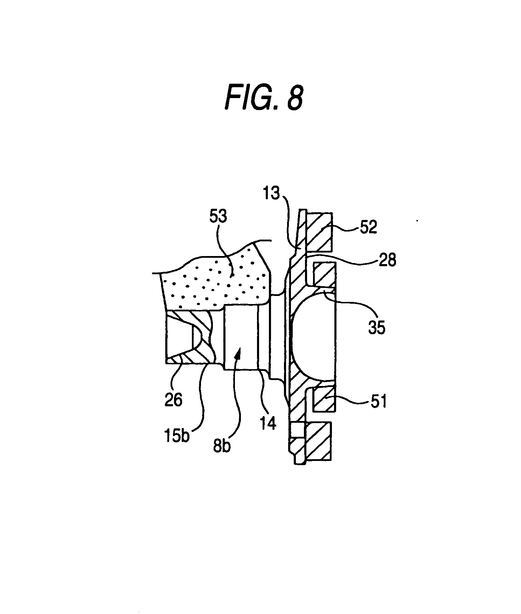

Next, as shown by Fig.8, the outer peripheral face of the positioning cylinder potion 35 of the hub 8b is grabbed by the chuck 51 and the jig 52 constituting a reference face of the positioning hub 8b is brought into contact with the outer side face 28 (right side face of Fig. 8) of the attaching flange 13. Further, under the state, while rotating the hub 8b centering on the center axis of the hub 8b, the grindstone 53 is butted to the outer peripheral face of the first inner ring track 14 and the small diameter stepped portion 15b, while guiding the grindstone 53 by the first inner ring track 14, the outer peripheral faces of the first inner ring track 14 and the small diameter stepped portion 15b are worked to finish to predetermined shapes.

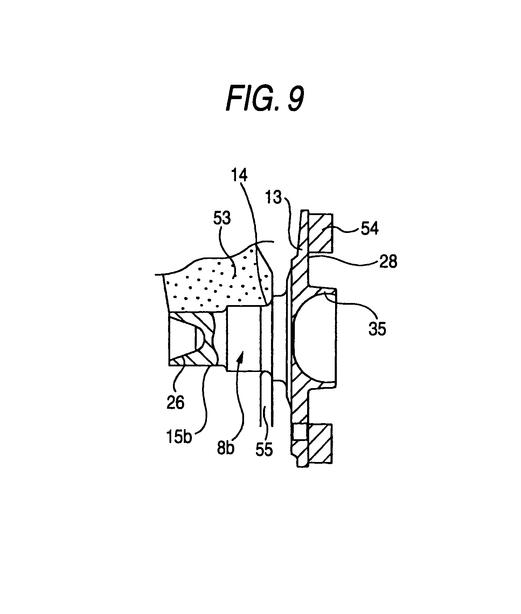

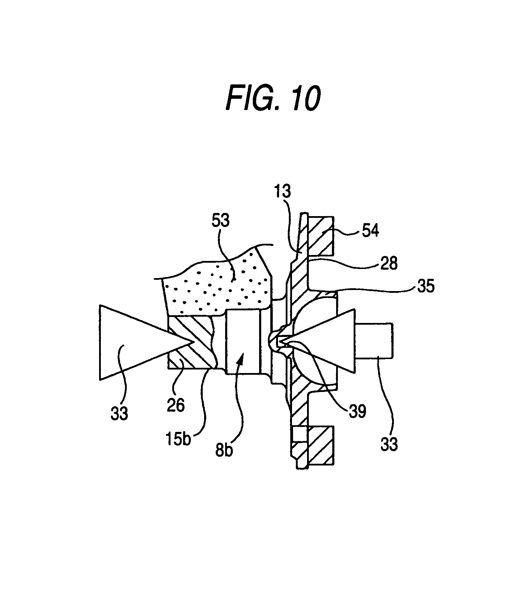

Further, as shown by Fig.9, the outer side face 28 (right side face of Fig. 9) of the attaching flange 13 may be supported by the backing plate 54 of a magnetic adsorption type, the shoe 55 may be brought into sliding contact with the first inner ring track 14 and while positioning the hub 8b in a radial direction by the shoe 55, the hub 8b may be rotated centering on the center axis of the hub 8b. Further, as shown by Fig. 10, the both end portions in the axial direction of the hub 8b may be support4ed by the pair of centers 33, 33, the backing plate 54 of the magnetic adsorption type may be brought into contact with the outer side face 28 (right side face of Fig. 10) of the attaching flange 13 and the hub 8b may be rotated centering on the center axis of the hub 8b.

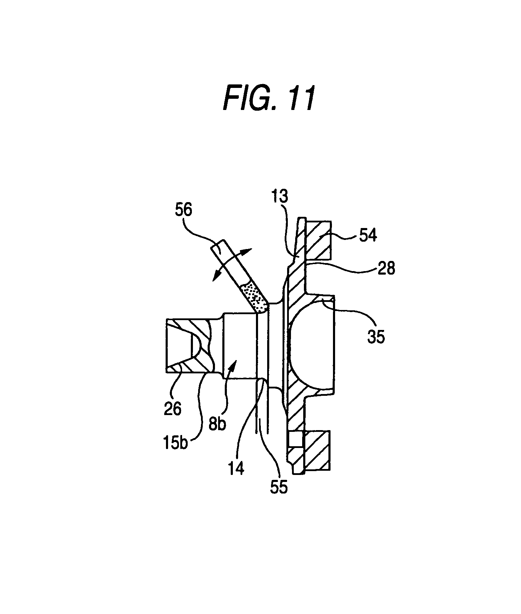

Further, superfinishing as shown by Fig. 11 may be carried out in place of polishing shown by Figs.8 through 10, mentioned above. That is, the outer side face 28 (right side face of Fig. 11) of the attaching flange 13 is supported by the backing plate 54 of the magnetic adsorption type and the shoe 55 is brought into sliding contact with the first inner ring track 14. Further, while positioning the hub 8b in the radial direction by the shoe 55, the hub 8b may be rotated centering on the center axis of the hub 8b and the first inner ring track 14 may be worked by the superfinishing grindstone 56.

According to the bearing unit 5b for a wheel of the example assembled with the hub 8b worked as described above, a positional relationship between the outer side face 28 of the attaching flange 13 and the first inner ring track 14 (as well as the second inner track 17) can be constituted by a regular relationship. As a result, a deflection of the braking rotating member (rotor 2) fixed to the attaching flange 13 can be restrained by promoting the perpendicularity of the outer side face 28 of the attaching flange 13 relative to the rotational center of the hub 8b. That is, after subjecting the portion indicated by the skewed lattice at the upper half portion of Fig.1 to the quenching processing, and the hub 8b is rotatably supported by the centers 33, 33 of the working apparatus centering on the center axis of the hub 8b, during a time period until removing the hub 8b from the respective centers 33, 33, the outer side face 28 of the attaching flange 13 and the first inner ring track 14 (as well as the outer peripheral face of the small diameter stepped portion 15b to which the inner ring 16 having the second inner ring track 17 is outwardly fitted to fix) are worked to finish to predetermined shapes (except polishing). Therefore, the rotational center of the hub 8b is not shifted in working the outer side face 28 of the attaching flange 13 and in working the first inner track 14 (and in working the small diameter stepped portion 15b), and while making the rotational center of the hub 8b stay at the same position, the outer side face 28 and the first inner ring track 14 (as well as the outer peripheral face of the small diameter stepped portion 15b) can be worked to finish (except polishing). Therefore, the positional relationship between the outer side face 28 of the attaching flange 13 and the first inner ring track 14 (as well as the second inner ring track 17) can be constituted by the regular relationship.

Further, in the case of the example, the outer side face 28 and the first inner ring track 14 (as well as the outer peripheral face of the small diameter stepped portion 15b) are worked to finish after the heat treatment and therefore, the positional relationship between the outer side face 28 and the first inner ring track 14 (as well as the second inner ring track 17) can be made to be regular despite thermal deformation based on the high frequency quenching processing. As a result, the deflection of the outer side face 28 can be restrained to be very small in the state of assembling the bearing unit 5b for a wheel as shown by Fig.1.

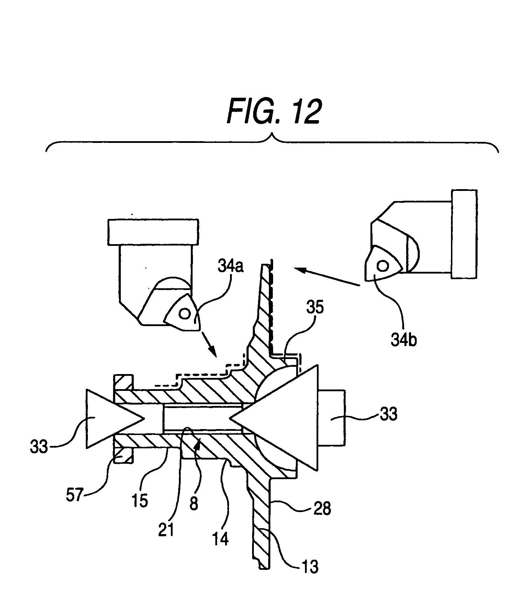

Further, the example is shown with regard to the case of applying the invention to the bearing unit 5b for a wheel for a driven wheel in which the hub 8b is fixed to the inner ring 16 by the calked portion 27. However, the invention is not limited to the bearing unit 5b for a wheel but the invention is applicable also to the bearing unit 5a for a wheel for a driven wheel in which the inner ring 16 is fixed to the hub 8b by the nut 25 as shown by Fig.21, mentioned above, or the bearing unit 5 for a wheel for a driving wheel as shown by Fig.20. When the invention is applied to the bearing unit 5 for a wheel for a driving wheel as shown by Fig.20 in the bearing units, as shown by Fig. 12, the centers 33, 33 are inserted into opening portions of both ends of the spline hole 21 formed at the center portion of the hub 8 and the hub 8 is rotatably supported centering on the center axis of the hub 8.

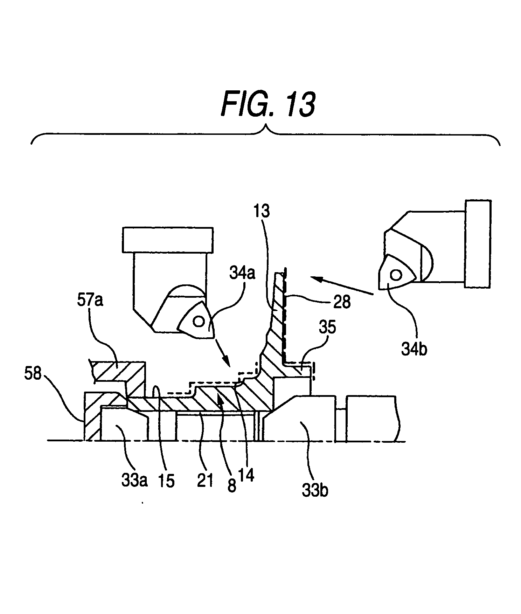

Next, Fig.13 shows a second example of the embodiment of the invention. Similar to Fig.12, mentioned above, Fig.13 shows a case of applying the invention to the bearing unit 5 for a wheel for a driving wheel as shown by Fig.20, mentioned above, showing a step similar to a step shown in Fig. 7 in steps of fabricating the hub 8b (refer to Fig.1) constituting the bearing unit 5a for a wheel. In the case of the example, the center 33a of one (left one of Fig.13) of a pair of the centers 33a, 33b is provided on an inner diameter side in a diameter direction of the chuck 57a for grabbing the outer peripheral face of the inner end portion of the hub 8 and centering (centering) of the hub 8 is carried out by the one center 33a.

That is, when the hub 8 is grabbed by the chuck 17a, the contact block 58 is brought into contact with the inner end face of the hub 8, and the one center 33a is inserted into an opening portion of the inner end (left end of Fig.13) of the spline hole 21 formed at the center portion of the hub 8. Further, in a state of centering the hub 8 by the one center 33a inserted into the opening portion of the inner end of the hub 8 in this way, the hub 8 is supported by the chuck 57a. Further, along therewith, other one (right one of Fig.13) of the center 33b provided to be concentric with the one center 33a in a state of being opposed to the one center 33a is inserted into an opening portion of an outer end (right end of Fig.13) of the hub 8 to support the hub 8 by the pair of centers 33a, 33b as well as the chuck 57a.

Further, before removing the hub 8 from the respective centers 33a, 33b as well as the chuck 57a from the state of supporting the hub 8 by the pair of centers 33a, 33b as well as the chuck 57a in this way, portions attached with broken lines in Fig.13 are worked to predetermined shapes. That is, a portion of reaching a portion proximate to the inner end of the small diameter stepped portion 15 from a portion proximate to the inner diameter of the inner side face of the attaching flange 13 as well as a portion reaching the outer end face of the positioning cylinder portion 35 from the outer peripheral edge of the outer side face 28 are subjected to machining for making shapes of the respective faces by desired shapes such as polishing or turning, and the outer side face 28 of the attaching flange 13, the outer peripheral face of the positioning cylinder portion 35, the first inner ring track 14, the portion of the outer peripheral face of the hub 8 between the first inner ring track 14 and the small diameter stepped portion 15 as well as the outer face of the small diameter stepped portion 15 are worked to predetermined shapes.

In other words, the hub 8 is removed from the respective centers 33a, 33b and the chuck 57a after working the outer side face 28 of the attaching flange 13, the outer peripheral face of the positioning cylinder portion 35, the first inner ring track 14, the interval portion of the hub 8 as well as the outer peripheral face of the small diameter stepped portion 15 to predetermined shapes in the state of supporting the hub 8 by the respective centers 33a, 33b as well as the chuck 57a as described above. Further, it is preferable to carry out a step which is carried out successive to the step shown in Fig.13, for example, finishing by the grindstone or the like before removing the hub 8 from the respective centers 33a, 33b as well as the chuck 57a. When the step which is carried out successively in this way is carried out before removing the hub 8, the rotational center of the hub 8 is not shifted to the step shown in Fig.13 and the step succeeding to the step and therefore, the working accuracy can further be promoted and the deflection of the braking rotating member (rotor 2) fixed to the attaching flange 13 can be restrained.

In the case of working the hub 8 to the predetermined shape in the state of being supported by the pair of centers 33a, 33b as well as the chuck 57a as in the above-described example (as well as the above-described first example of the embodiment), in comparison with the case of supporting the hub 8 only by the pair of centers 33a, 33b, or in comparison with the case of supporting the hub 8 only by the chuck 57a, the rotational center of the hub 8 can be made to be difficult to shift in working. That is, by supporting the hub 8 by the pair of centers 33a, 33b as well as the chuck 57a, despite a force exerted to the hub 8 in working the hub 8 or the like, the rotational center of the hub 8 can be continued to be maintained at the predetermined position and the hub 8 can be worked highly accurately. The point is similar to the case of the first example of the embodiment. Other constitution and operation are similar to those of the above-described first example and therefore, duplicated illustration and explanation will be omitted.

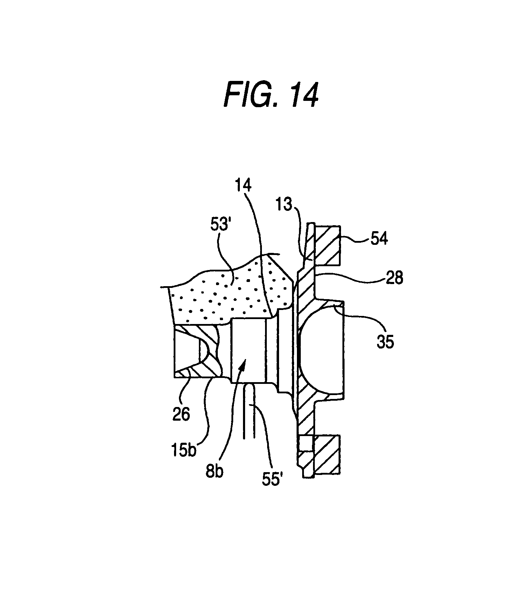

Next, Fig.14 shows a third example of the embodiment of the invention. Fig.14 shows a step similar to a step of Fig.9 showing the second example of a finishing step (step succeeding to the step of Fig.7) in steps of fabricating the hub 8b constituting the bearing unit 5b (Fig. 1) for a wheel explained in the above-described first example of the embodiment. Whereas in the case of the above-described second example shown in Fig. 9, the shoe 55 for positioning the hub 8b in the radial direction is brought into sliding contact with the first inner ring track 12, in the case of the example, the shoe 55' is brought into contact with a portion of the outer peripheral face of the middle portion of the hub 8b at an interval between the inner ring track 14 and the small diameter stepped portion 15b. When the hub 8b is positioned by bringing the shoe 55' into sliding contact with the interval portion of the hub 8b in this way, unless a positional relationship between the interval portion of the hub 8b and the outer side face 28 of the attaching flange 13 is not proper, there is a possibility that a positional relationship between the first inner ring track 14 and the small diameter stepped portion 15b and the like finished by the grindstone 53' and the outer side face 28 of the attaching flange 13 becomes improper.

In order to prevent the positional relationship from being improper, in the case of the example, at the step shown in Fig.7 of the first example of the embodiment constituting the step before finishing, at least the interval portion of the hub 8b and the outer side face of the flange 13 are worked to predetermined shapes before removing the hub 8b from the respective centers 33, 33 as well as the chuck 57 from the state of supporting the hub 8b by the pair of centers 33, 33 as well as the chuck 57. That is, the hub 8b is removed from the respective centers 33, 33 and the chuck 57 after working at least the outer side face 28 of the attaching flange 13 and the portion of the outer peripheral face of the hub 8b at the interval between the first inner ring track 14 and the small diameter stepped portion 15b with which the shoe 55' is brought into sliding contact in finishing in a state of supporting the hub 8b by the respective centers 33, 33 as well as the chuck 57 in this way.

When the interval portion as well as the outer side face 28 of the attaching flange 13 and the hub 8b are worked to predetermined shapes, even in the case of the positioning the hub 8b by bringing the shoe 55' into sliding contact with the interval portion of the hub 8b in finishing as in the example, the positional relationship between the first inner ring track 14 and the small diameter stepped portion 15b and therefore, the second inner ring track 17 formed at the outer peripheral face of the inner ring 16 which is outwardly fitted to fix to the small diameter stepped portion 15b and the outer side face 18 of the attaching flange 13 does not become improper. Further, in the case of the example, an outer end face of the grindstone 53' is brought into sliding contact with a portion of the attaching flange 13 proximate to a base end of an inner side face thereof to also finish the portion. When the portion of the attaching flange 13 proximate to the base end of the inner side face is finished in this way, sealing performance of the seal ring 20a (refer to Fig.1) brought into sliding contact with the portion can be promoted. Other constitution and operation are similar to those of the first through the second examples, mentioned above, and therefore, duplicated illustration and explanation will be omitted.

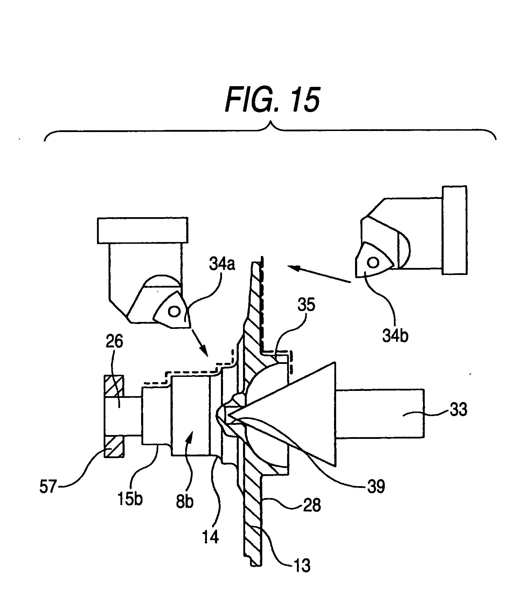

Next, Fig.15 shows a fourth example of the embodiment of the invention. Fig.15 shows a step similar to the step of Fig.7 in steps of fabricating the hub 8b constituting the bearing unit 5b for a wheel (Fig.1) explained in the above-described first example of the embodiment. Whereas in the case of the above-described first example shown in Fig.7, the hub 8b is worked in the state of being supported by the pair of centers 33, 33 and the chuck 57, in the case of the example, the hub 8b is worked in a state of being supported by the chuck 57 and a single piece of the center 33. That is, in the case of the example, the outer peripheral face of the inner end portion of the hub 8b is grabbed by the chuck 57 and the center 33 is butted at the center of the bottom portion of the positioning cylinder portion 35 similarly provided at the outer end portion of the hub 8b.

Further, before removing the hub 8b from the center 33 and the chuck 57 from the state of supporting the hub 8b by the center 33 and the chuck 57 in this way, portions attached with broken lines in Fig. 15 are worked to predetermined shapes. That is, the portion reaching the inner end portion of the small diameter stepped portion 15b from the portion of the attaching flange 13 proximate to the inner diameter of the inner side face as well as the portion reaching the outer end face of the positioning cylinder portion 35 from the outer peripheral edge of the outer side face 28 of the attaching flange 13 are subjected to machining in order to constitute shapes of the respective faces by desired shapes such as polishing or turning, and the outer side face 28 of the attaching flange 13, the outer peripheral face of the positioning cylinder portion 35, the first inner ring track 14, the portion of the outer peripheral face of the hub 8b at the interval between the first inner ring track 14 and the small diameter stepped portion 15b as well as the outer peripheral face of the small diameter stepped portion 15b are worked to predetermined shapes. Other constitution and operation are similar to those of the first through the third examples, mentioned above, and therefore, duplicated illustration and explanation will be omitted.

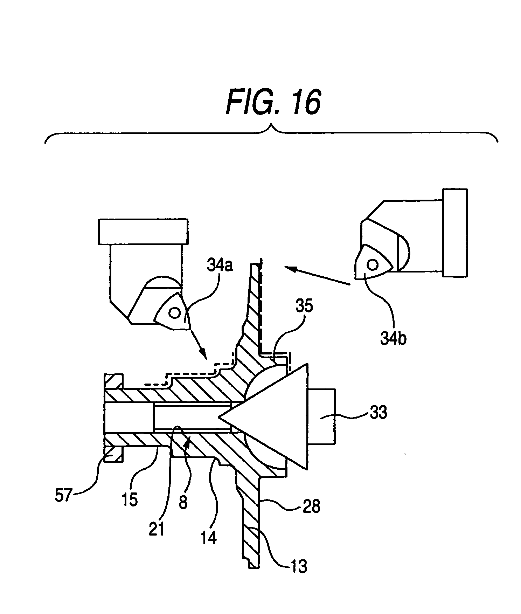

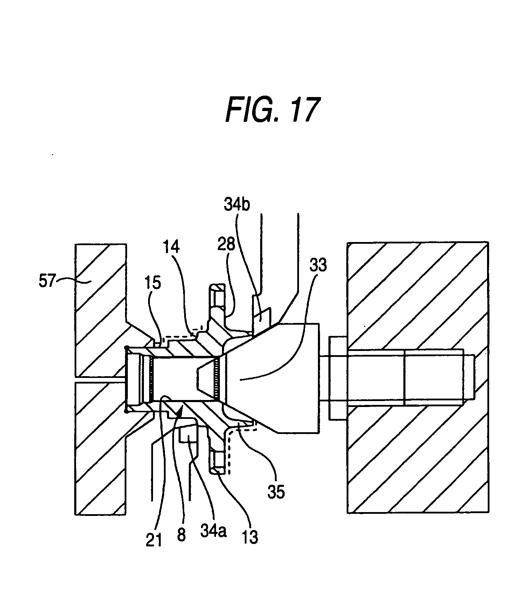

Next, Figs.16 through 17 show a fifth example of the embodiment of the invention. Figs.16 through 17 show a step similar to the step of Fig.7 in steps of fabricating the hub 8b (Fig.1) constituting the bearing unit 5b for a wheel explained in the above-described first example of the embodiment. Whereas in the case of the first example shown in Fig. 7, mentioned above, the hub 8b constituting the bearing unit 5b for a wheel for a driven wheel is worked in the state of being supported by the pair of centers 33 and the chuck 57, in the case of the example, the hub 8 constituting the bearing unit 5 (Fig.20) for a wheel for a driving wheel is worked in a state of being supported by the chuck 57 and the single piece of the center 33. That is, in the case of the example, the outer peripheral face of the inner end portion (left end portions of Figs. 16 through 17) of the hub 8 is grabbed by the chuck 57 and the center 33 is butted to the opening portion of the outer end of the spline hole 21 provided at the center portion of the hub 8. Further, Fig.17 of Figs.16 through 17 showing the example shows the example more specifically (realistically) than Fig.16. Other constitution and operation are similar to those of the above-described fourth example and therefore, duplicated illustration and explanation will be omitted.

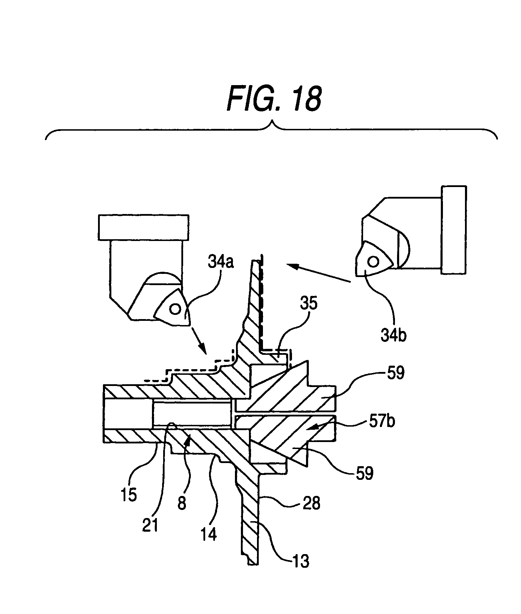

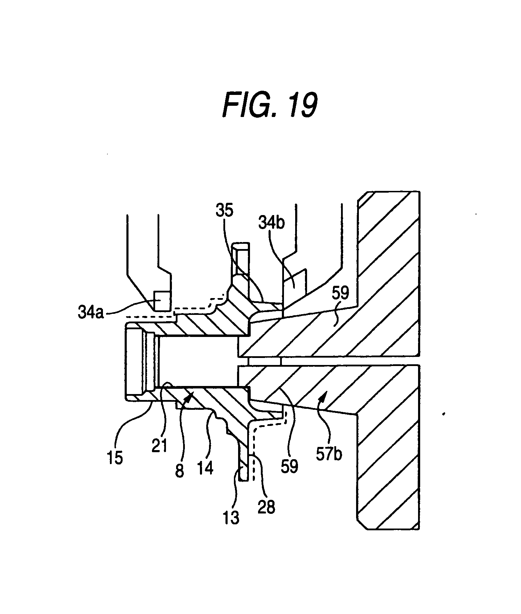

Next, Figs.18 through 19 show a sixth example of the embodiment of the invention. Figs.18 through 19 show a step similar to the step of Fig.7 in steps of fabricating the hub 8b (Fig.1) constituting the bearing unit 5b for a wheel explained in the above-described first example of the embodiment. Whereas in the case of the above-described first example shown in Fig.7, the hub 8b constituting the bearing unit 5b for a wheel for a driven wheel is worked in a state of being supported by the pair of centers 33 as well as the chuck 57, in the case of the example, the hub 8b constituting the bearing unit 5 for a wheel for a driving wheel (Fig.20) is worked in a state of being supported by the chuck 57b substantially in a conical shape serving to carry out also a function of the center. The chuck 57b is constituted by two more pieces of the chuck claws 59, 59, the respective chuck claws 59, 59 are displaced from each other to outer sides in the diameter direction in a state of being inserted into the opening portion of the outer end (right ends of Figs. 18 through 19) of the spline hole 21 of the hub 8, and the hub 8 is rotatably supported in a state of centering (centering) the hub 8 by the respective chuck claws 59, 59. Further, before removing the hub 8 from the chuck 57b from the state of supporting the hub 8 by the chuck 57b in this way, portions attached with broken lines in Figs. 18 through 19 are worked to predetermined shapes. Further, Fig. 19 of Figs. 18 through 19 showing the example shows the example more specifically (realistically) than Fig.18. Other constitution and operation are similar to those of the above-described fifth example and therefore, duplicated illustration and explanation will be omitted.

Although the invention is explained in details and in reference to the specific embodiment, it is apparent for the skilled person that the invention can be changed or modified variously without deviating from the spirit and the range of the invention.

The invention is based on Japanese Patent Application (Japanese Patent Application No.2003-019887) filed on January 29, 2003 and Japanese Patent Application (Japanese Patent Application No.2003-121894) filed on April 25, 2003 and a content thereof is incorporated herein by reference.

### <Industrial Applicability>

As described above, the bearing unit for a wheel and the method of fabricating the same according to the invention are useful for a bearing unit for a wheel for supporting a wheel of an automobile as well as a braking rotating member of a rotor, a drum or the like.

## Claims

1. A bearing unit for a wheel comprising:
an outer ring having double rows of outer ring tracks at an inner peripheral face thereof,
a hub directly formed with a first inner ring track at a middle portion of an outer peripheral face thereof and formed with a small diameter stepped portion at an inner end portion thereof,
an inner ring outwardly fitted to fix to the small diameter stepped portion and having a second inner ring track at an outer peripheral face, and
a rolling member pluralities of pieces of which are respectively provided rollably between the respective outer ring tracks and the first and the second inner ring tracks, wherein
a portion of the outer peripheral face of the hub proximate to an outer end thereof is provided with an attaching flange for coupling to fix a braking rotating member and a wheel at a side face thereof in a state of being used, and wherein
the side face of the attaching flange for coupling to fix the braking rotating member and the wheel, and the first inner ring track directly formed at the hub are worked to predetermined shapes after rotatably supporting the hub by a supporting portion of a working apparatus and before removing the hub from the supporting portion.

2. The bearing unit for a wheel according to Claim 1, wherein
in place of the first inner ring track, the side face of the attaching flange for coupling to fix the braking rotating member and the wheel, and a portion of the outer peripheral face of the middle portion of the hub at an interval between the first inner ring track and the small diameter stepped portion are worked to predetermined shapes after supporting the hub rotatably by the supporting portion of the working apparatus and before removing the hub from the supporting portion.

3. The bearing unit for a wheel according to Claim 1 or 2, wherein
the side face of the attaching flange and the first inner ring track or the interval portion of the hub as well as an outer peripheral face of the small diameter stepped portion to which the inner ring having the second inner ring track is outwardly fitted to fix are worked to predetermined shapes after supporting the hub rotatably by the supporting portion of the working apparatus and before removing the hub from the supporting portion.

4. The bearing unit for a wheel according to any one of Claims 1 through 3, wherein
the side face of the attaching flange and the first inner ring track or the interval portion of the hub as well as an outer peripheral face of a positioning cylinder portion in a cylindrical shape for positioning the wheel are worked to predetermined shapes after supporting the hub rotatably by the supporting portion of the braking apparatus and before removing the hub from the supporting portion.

5. The bearing unit for a wheel according to any one of Claims 1 through 4, wherein
the first inner ring track is worked to the predetermined shape in a state of supporting both end portions in an axial direction of the hub rotatably by a pair of centers after subjecting the outer peripheral face of the hub to a quenching processing.

6. The bearing unit for a wheel according to any one of Claims 1 through 5, wherein
the hub is worked to the predetermined shape in a state of being supported by the supporting portion of the working apparatus rotatably centering on a center axis thereof.

7. The method of fabricating a bearing unit for a wheel according to any one of Claims 1 through 6,
the method comprising the steps of:
after supporting the hub rotatably by the supporting portion of the working apparatus, before removing the hub from the supporting portion,
working the side face of the attaching flange for coupling to fix the braking rotating member and the wheel, and the first inner ring track directly formed at the hub or the portion of the outer peripheral face of the middle portion of the hub at the interval between the first inner ring track and the small diameter stepped portion to the predetermined shapes.

8. The bearing unit for a wheel according to Claim 7, wherein
after supporting the hub rotatably by the supporting portion of the working apparatus, before removing the hub from the supporting portion,
the side face of the attaching flange and the first inner ring track or the interval portion of the hub as well as the outer peripheral face of the small diameter stepped portion to which the inner ring having the second inner ring track is outwardly fitted to fix are worked to the predetermined shapes.

9. The bearing unit for a wheel according to Claim 7, or 8, wherein
after supporting the hub rotatably by the supporting portion of the working apparatus, before removing the hub from the supporting portion,
the side face of the attaching flange and the first inner ring track or the interval portion of the hub as well as the outer peripheral face of the positioning cylinder portion in the cylindrical shape for positioning the wheel are worked to the predetermined shapes.

10. The bearing unit for a wheel according to any one of Claims 7 through 9, wherein
the first inner ring track is worked to the predetermined shape in the state of supporting the both end portions in the axial direction of the hub by the pair of centers after subjecting the outer peripheral face of the hub to the quenching processing.

11. The bearing unit for a wheel according to any one of Claims 7 through 10, wherein
the hub is worked to the predetermined shape in the state of supporting the hub by the supporting portion of the working apparatus rotatably centering on the center axis.

12. A bearing unit for a wheel comprising:
an outer ring having double rows of outer ring tracks at an inner peripheral face thereof,
a hub directly formed with a first inner ring track at a middle portion of an outer peripheral face thereof and formed with a small diameter stepped portion at an inner end portion thereof,
an inner ring outwardly fitted to fix to the small diameter stepped portion and having a second inner ring track at an outer peripheral face thereof, and
a rolling member pluralities of pieces of which are rollably provided between the respective outer ring tracks and the first and the second inner ring tracks, wherein
a portion of the outer peripheral face of the hub proximate to an outer end thereof is provided with an attaching flange for coupling to fix a braking rotating member and a wheel at a side face thereof in a state of being used, and wherein
the hub is worked to a predetermined shape in a state of grabbing an end portion in an axial direction thereof by a chuck and supporting both end portions in the axial direction by a pair of centers.

13. The bearing unit for a wheel according to Claim 12, wherein
one center of the pair of the centers is provided on an inner diameter side of the chuck for centering the hub,
other center thereof is provided to be concentric with the one center in a state of being opposed to the one center, and
the hub is worked to the predetermined shape in the state of supporting the both end portions in the axial direction by the pair of centers.

14. The method of fabricating a bearing unit for a wheel according to Claim 12, or 13, wherein
the hub is worked to the predetermined shape in a state of respectively supporting an end portion in the axial direction of the hub by the chuck and supporting the both end portions in the axial direction by the pair of centers.
